Europäisches Patentamt
European Patent Office
Office européen des brevets

(19)

(11) Publication number: **0 115 688 B1**

(12) # EUROPEAN PATENT SPECIFICATION

(45) Date of publication of patent specification: **17.07.91**

(51) Int. Cl.5: **C22C 29/00**, C22C 1/00, C04B 35/65, C04B 35/58, C25C 3/08

(21) Application number: **83307832.2**

(22) Date of filing: **21.12.83**

(54) **Reaction sintered cermet and use thereof in electrolytic cell in aluminum reaction.**

(30) Priority: **30.12.82 US 454669**
**30.12.82 US 454670**

(43) Date of publication of application:
**15.08.84 Bulletin 84/33**

(45) Publication of the grant of the patent:
**17.07.91 Bulletin 91/29**

(84) Designated Contracting States:
**BE CH DE FR GB IT LI SE**

(56) References cited:
**BE-A- 661 802**
**GB-A- 901 520**
**US-A- 3 143 413**
**US-A- 3 353 954**

**CHEMICAL ABSTRACTS, vol. 97, no. 26, 27th December 1982, page 314, no. 221083j, Columbus, Ohio, US; H. SHEINBERG: "Nonconventional hard-metal composition", & REPORT 1981, LA-8934**

(73) Proprietor: **Corning Glass Works**
**Houghton Park**
**Corning New York 14831(US)**

(72) Inventor: **DeAngelis, Thomas Peter**
**616 Groff Road**
**Horseheads New York(US)**

(74) Representative: **Smith, Sydney et al**
**Elkington and Fife Beacon House 113 Kingsway**
**London WC2B 6PP(GB)**

**EP 0 115 688 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

COMPOSITES, vol. 6, no. 2, page 86, March 1975, Haywards Heath, Sussex, GB; R. WARREN: "Refractory and wear resistant materials"

CHEMICAL ABSTRACTS, vol. 70, no. 24, 16th June 1969, page 99,no. 107881k, Columbus, Ohio, US; R.K. STRINGER et al.: "Reaction pressing: a new fabrication concept for intermetallic and metal-metalloid compounds", & SPEC. CERAM., PROC. SYMP. BRIT. CERAM. RES. ASS. 1967 (Pub. 1968), (4), 37-55

Nomenclature of Inorg. Chemistry 2.cd (Definitive Rules 1970.) Issued by the Commission on the Nomencl. of Inorg. Chemistry.

## Description

This invention relates to a reaction sintered cermet and use thereof.

The field of the invention is cermet bodies which have first phase or phases of nonoxide ceramic compound and second phase or phases of metal, alloy and/or intermetallic compound. The nonoxide ceramic compounds are boride, carbide, nitride, silicide, sulfide and combination thereof. A combination of these compounds can be either two discrete phases (e.g. a boride and a carbide) or a single complex phase (e.g. a borocarbide).

This invention also relates to cells and components thereof employed in the electrolytic production of aluminum from a fused bath, both by electrowinning and electrorefining processes, and to the aluminum production processes employing such cells and components.

Most commonly heretofore, these cermet bodies have been of the type physically formed of ingredients corresponding to the crystalline phases in the bodies. By way of exemplary illustration, reference is made to the following prior art documents. U.S. Patent 3,037,857 discloses mixing, shaping and heating particulate refractory metal boride with either powdered or molten aluminum metal or alloy to yield solid cermet bodies of the same boride and metal or alloy phases. U.S. Patent 3,274,093 discloses cold-pressing titanium diboride powder to form a porous body that is impregnated with molten aluminum. Belgian Patent 644066, U.S. Patent 3,178,807 and U.S. Patent 3,459,515 disclose mixing, explosively compacting and heating particulate mixtures of aluminum and certain carbide and/or boride to yield bodies of essentially the same aluminum and carbide and/or boride phases. U.S. Patent 3,328,280 discloses mixing and, either simultaneously or sequentially, pressing and heating particulate mixtures of aluminum nitride and titanium diboride and/or aluminum.

Cermet bodies of the type described in the preceding paragraph have properties which are dependent upon and limited by the inherent effects of the physical nature of their ingredients which are physically combined. The distribution and sizing of the phases are generally directly related to the particle sizing and mixing of ingredient powders and to sizing and distribution of pores in a porous body that is impregnated. The powders are not always easily available in uniformly fine sizes for obtaining superior properties. Milling of powders to improve their sizing can lead to oxidation contamination of the metal and nonoxide powders in the absence of controlled atmosphere milling requiring extra cost. In fact, some powders such as $TiB_2$ in sizes of about 5 $\mu$m or finer present fire and explosion hazard during milling due to their rapid reaction with oxygen in air under conditions of frictional heating. Oxidation contamination often interferes with proper sintering of the powder mixtures, with or without simultaneous pressing, so that the resultant body is weak and has relatively poor properties. Although explosive compaction was proposed to overcome the latter difficulty, it has serious drawbacks that limit its usefulness, as is explained in the article by C. Hoenig and C. Yust entitled "Explosive Compaction of AlN, Amorphous $Si_3N_4$, Boron, and $Al_2O_3$ Ceramics" in the American Ceramic Society Bulletin, Vol. 60 (1981) beginning at page 1175.

Amongst numerous reactions for forming other types of multiphase bodies by an unusual reaction hot pressing process involving passage of electric current through the reaction mixture during the process, U.S. Patent 3,143,413 discloses only one reaction hot pressed cermet of metal and nonoxide ceramic phases, via. the molar combination of Ni + 2BN + TiN + 2ZrC, but no details are given about the properties of such body made from -60 mesh starting powders hot pressed at temperature between 1800-2300 °C.

There has been a continuing need for cermets of metal and nonoxide phases with easily controlled and predictable composition, crystal structure (including uniform phase distribution and fine grain size) and related physical properties, and which can be easily and economically fabricated in a variety of shapes.

Most aluminum is made by the Hall-Heroult process comprising electrolysis of alumina in a molten cryolite bath using carbon anodes and cathodes. The aluminum settles under the cryolite bath on the carbon cathode. However, the aluminum does not wet the carbon cathode and electromagnetic forces in the cell produce waves in and the humping of the molten aluminum. To ensure that the carbon cathode floor of the cell is always completely covered with aluminum, a relatively thick cathode layer, pad or pool of aluminum is maintained, which continues to be subject to waving and humping movement. The latter factor necessitates substantial anode-cathode spacing or gap to avoid shorting between the anode and the moving aluminum cathode pool. It is that spacing or gap that causes considerable electrical energy loss in the resistance heating of the cryolite-aluminum cell bath therein.

Various cell designs of drained cathodes and of cathode pool packing, baffles or weirs have been proposed to alleviate the aluminum movement and energy problem. Also, various aluminum-wettable materials and bodies have been proposed without much success for economically accomodating cell designs that can alleviate those problems. There remains the basic need for cathodes and cathode pool structures of aluminum wettable, durable bodies which can be readily and economically fabricated.

Summary of the Invention

This invention substantially overcomes the aforesaid limitations of the prior art and enables the practical attainment of greater technical and economic ease and flexibility by providing cermet bodies of metal and nonoxide phases with specially tailored and improved properties as noted herein, and by providing certain components of an electrolytic aluminum production cell, which in use are normally in contact with molten aluminum or in electrical contact with other components which are normally in contact with molten aluminum, with surface and/or inner portions of the components made of reaction sintered cermet as defined herein, which is wettable by and durable in molten aluminum and cryolite as well as being electrically conductive. The invention involves not only the new components, but also the cells for and methods of producing aluminum by electrolysis, including both electrowinning and electrorefining aluminum.

The invention is characterized by the discovery of a novel, very tough and hard, reaction sintered cermet body and the method of forming it, which body is characterized by uniformly fine-grained and intimately interdispersed phases of metal, alloy and/or intermetallic compound and of nonoxide ceramic compound or compounds easily obtained from reactants generally having substantially larger particle sizing than the grain size of the phases in the cermet body, viz. usually one order of magnitude larger. In comparison with a body of corresponding chemical composition made as a hot pressed physical mixture of commercially available particulate materials, the reaction hot pressed body of this invention is noted for superior properties, such as virtual absence of open porosity, great toughness and hardness, very notable elevated temperature deformation resistance, enhanced flexure strength, improved corrosion/erosion resistance to molten aluminum and cryolite (with Al metal phase) and lower electrical resistivity (notably with refractory metal boride phase). The body of the invention is also characterized by good thermal shock and oxidation resistance, and by some degree of ductility on impact. It is also notable that these valuable properties are attainable in the body of the invention despite some oxygen contamination therein.

The invention is a reaction sintered cermet body or cell component consisting of a fine-grained, homogenous, intimate interdispersion of:

(a) 30-95 (preferably 45-95) mole percent of first phase or phases having a maximum grain size (e.g. at least 95 volume percent) not greater than 10 $\mu$m and being boride, carbide, nitride, silicide, sulfide or combination thereof of one or more of the elements of Groups II A, III B exclusive of B, IV B, II B, III A including lanthanide and actinide series elements, IV A, V A, VI A, VII A and VIII A, and

(b) 5-70 (preferably 5-55) mole percent of second phase or phases being metal, alloy, intermetallic compound or combination thereof of one or more of the elements of Groups III B, exclusive of B, IV B, I B, II B, IV A, VA, VI A, VII A, VIII A;

which body contains 0 to 4 (preferably <1) weight percent oxygen and is prepared by the process comprising:

(c) admixing particulate reactants of maximum particle size (e.g. at least 95 volume percent) not greater than 150 $\mu$m and being elements, compounds, intermetallic compounds, alloys or combination thereof in stoichiometric proportions to substantially form the first and second phases, and

(d) shaping and heating the admixture to form the reaction sintered body, and heating being done in nonreactive atmosphere and at temperature at which the reaction and sintering occurs between the reactants to form the first and second phases.

The designation of the groups of the Periodic Table is in accordance with the Definitive Rules 1970 issued by the IUPAC Commission of the Nomenclature of Inorganic Chemistry.

Reaction sintering involves the dual effect of reaction between and sintering together of the admixed particulate reactants at temperature causing the reaction to occur and be completed. It may be effected at atmospheric, subatmospheric or superatmospheric pressure. The latter condition involves the simultaneous shaping and heating steps of hot pressing to produce a body of the invention with very little or no open porosity and highest strength properties, although some preliminary separate pressing or heating of the reactant admixture may be advantageously done. Where open porosity is desired in an otherwise tough and hard body of the invention, the separate heating step at atmospheric or subatmospheric pressure may be employed sequentially following the shaping step.

Of course, reaction temperature is governed by the particular reactants and their identified reaction temperature at whatever pressure is selected for performing the heating step.

An especially unique body of the invention has very fine grain sizing and thickness of the layer of metal, alloy and/or intermetallic compound at least partially separating the grains of nonoxide ceramic phase. The latter layer thickness is generally not greater than 1 $\mu$m and, for best strength and deformation resistance, it is less than about 1,000 x $10^{-10}$m (1000Å). Desirably the mean grain size of the first or nonoxide ceramic phase or phases is not greater than 6 $\mu$m and the mean particle size of the reactants is less than 100 $\mu$m.

The body of the invention may contain, as part of the first and/or second phases, diluent which is a nonreacted portion of the reactant admixture as a stoichiometric excess amount of a reactant and/or as a metal, alloy, intermetallic compound or nonoxide ceramic compound according to the aforesaid invention definition but different than the reactants.

## Brief Description of the Drawing

The sole figure is a schematic, vertical cross-sectional view of an aluminum electrowinning cell incorporating components comprising the composite body in accordance with the invention.

## Detailed Description

Part of the invention will be illustrated by reference to one exemplary type of production cell and process, but it is capable of being adapted to other types of electrolytic aluminum production cells and processes, including electrorefining.

The sole figure schematically shows a cell comprising a carbon liner and cathode base 1 in a heat-insulating shell 2 and with a cathode current collector or bar 3 embedded in the liner 1. Within the liner 1 is a shallow or thin cathodic layer or film 4 of molten aluminum and an alumina-containing molten cryolite electrolyte 5 at a temperature of 940-1000°C. This electrolyte commonly consists of sodium cryolite ($Na_3AlB_6$) as the major component plus about 4-10 wt.% calcium fluoride, about 2-10 wt.% aluminum fluoride and about 2-8 wt.% alumina. However, as desired, the electrolyte may be of other alumina-containing compositions. The aluminum layer 4 and molten electrolyte 5 are surrounded by a crust or frozen layer or "freeze" 6 of the solidified electrolyte. Anodes consisting of prebaked blocks of carbon 7, which are suspended by anode current feeders 8, dip into the molten electrolyte 5 above the shallow aluminum layer or film 4, with a spacing d being maintained between the bottom of blocks 7 and the top of the thin layer or film 4. Commonly commercial cells have several rows of pairs of anodes 7. Blocks 7 are generally of the same size in each cell. Such size can range from about 60x40x40 cm for small cells to about 150x100x70 cm for large cells. Operating anode current density is usually between 6 and 10 $kA/m^2$.

The carbon cathode base 1 has its upper surface, which faces anode blocks 7, covered by a cathode layer 9 of slabs, segments or plates positioned either closely together or in spaced relation to allow the molten aluminum formed as film 4 on layer 9 to drain continuously off of the top of layer 9 into suitable reservoir or collection basin (not shown). The segments of layer 9 can be either fastened to the carbon base 1 (e.g. by pegs of carbon or the material of layer 9) or merely placed thereon, with mating surfaces providing good electrical contact as needed. These segments of layer 9 (or surface portion thereof) are one of the components desirably formed of reaction sintered cermet according to the invention. Such segments, plates or slabs of the reaction sintered cermet can be about 0.5-5 cm thick e.g. approximately 2.5 cm. They can be of any suitable length, width and geometric shape. For convenience of manufacture and installation, the slabs can be made with length and width dimensions in the range of about 5-15 cm, e.g. about 10 cm., for square or hexagonal shapes.

By using this layer 9 of the cermet plates of the invention as an operative aluminum-wettable surface in contact with the cathodically collected molten aluminum, layer 4 of such molten aluminum can be easily maintained thin enough to avoid significant waving or humping therein, e.g. as a thin film typically less than about 1 mm or as a shallow layer of desired constant thickness, e.g. up to about 1 cm, if appropriate weirs or restraining means (not shown) are used at edges of layer 9 (which may also be formed of the cermet according to this invention). In either case, no significant waving or humping occurs in the thin aluminum layer 4 and the distance d can be greatly and reliably minimized, e.g. to about 2-4 cm, to reduce electrical energy loss.

Further electrical energy savings may be achieved when even further portions of cell lining 1 are also constructed of the cermet components of the invention. Even the cathode current collector 3 (or inner portion thereof) may be formed of those cermet components.

If carbon anodes 7 are employed, their position with respect to the desired spacing d can be adjusted as the blocks 7 wear away, with computer-controlled anode feed devices maintaining the gap d relatively constant. Alternatively, the carbon anodes 7 can be replaced with oxygen-evolving anodes that remain relatively dimensionally stable, in which case the cell may be operated at higher current densities up to 20-50 $kA/m^2$. Optionally these anode 7 may have a protective and/or reinforcing casing 10, e.g. of alumina, to reduce the rate of wear and loss of carbon blocks 7.

In producing aluminum in the cell shown in the drawing, additional alumina is fed into the electrolyte 5 as it becomes depleted of alumina by its electrolytic reduction to aluminum which settles onto and drains

off of layer 9 in conventional manner.

Body or Component Preparation

It is believed that reaction sintering relies on the reaction having a substantial negative heat of formation as the driving force for the reaction. The products or bodies formed must have lower free energy of formation than the reactants from which they were prepared. The elements of the groups of the Periodic Table as recited in the description of the invention are selected for the invention body so as to conform to these principles.

Reaction sintering is initiated by heating the shaped mixture. At the reaction initiation temperature, the reactants begin to react and liberate a substantial amount of heat. This exotherm causes a sharp temperature rise in the reactant powder mixture. It is believed that this-rapid temperature rise permits rapid diffusion of the reactants within the mixture, which causes either hot pressing compaction or sintering shrinkage under atmospheric or subatmospheric pressure as well as further chemical reaction to occur quickly. The reaction initiating temperature is generally much lower than the temperature necessary to attain a dense body by conventional hot pressing or separate pressing and sintering of preformed phase ingredients where no reaction occurs. This is particularly beneficial in this invention where higher temperatures may be deleterious to the metal phase.

Several processing parameters may be adjusted to optimize the conduction of the reaction sintering and the properties of the resultant cermet body. Some of these parameters are: type, purity and surface area of the particulate reactants; stoichiometry of the reactant mixture; pretreatment of the reactants, rate of heating; magnitude of applied pressure before and/or during heating; post heating treatments; and geometry of the body or product.

Reaction sintering of admixtures according to this invention produces articles or bodies with the nonoxide ceramic compound phase or phases having very small grain size, generally about one order of magnitude smaller than the particle size of the starting reactant powders. The reaction sintered cermet bodies can be easily prepared with maximum grain sizes of the nonoxide ceramic compound phase or phases being at least 95 volume percent not greater than 5 μm (preferably 2 μm) or even less with mean grain sizes of such phase or phases being less than 1 μm. These very fine grain sizes can be attained by using reactants with maximum particle sizes substantially (e.g. at least 95 volume percent) not greater than 44 μm or with mean particle sizes less than about 20 μm. Grain growth is usually not experienced because the products or bodies can be made at significantly lower temperatures with shorter hold times at heating temperature than by conventional nonreactive manufacturing techniques. Achieving such small grain sizes is often difficult if not impractical to accomplish using conventional nonreactive techniques because many preformed phase powders are not readily available in such small particle size of less than 5 μm for the reasons noted above.

Generally the particulate reactants are mixed in the stoichiometric proportions to form the desired product phases. For example, the following molar proportion formula describes exemplary reaction mixture and product phases:

$$\underbrace{TiH_2 + AlB_2}_{\text{(reactants)}} \rightarrow \underbrace{TiB_2 + Al}_{\text{(product phases)}} + \underbrace{H_2}_{\text{(gas)}}$$

However, nonstoichiometric proportions may be used in order to vary the properties of the product or to control the reaction process. Powdered diluent material may also be added to the reactant mixture. The diluent may be or contain one of the elements of the reactants or may be the same as one of the reaction-produced phases in the products or may be other suitable material, any of which may be used to control the reaction sintering or properties of the resultant product. The amount of diluent or diluents must be less than that amount which would prevent the reaction sintering from taking place.

The reactants can be mixed or blended in any suitable manner known to those skilled in ceramic technology for yielding an intimate, homogenous mixture of reactant particles, e.g. by ball milling in dry or wet condition.

For very dense products, the hot pressing procedure, including hot isostatic pressing, is employed. The mixed reactants are charged into a mold. If desired, those reactants may be given pretreatments such as dehydration, degassing or burn-out of binder, provided the pretreatment temperature is kept below the reaction initiation temperature. It is advantageous to precompact the reactant mixture at room temperature

and at 50-100% of hot pressing pressure to ensure a uniformly compacted product after hot pressing. This was routinely done in making samples of the invention. For common hot pressing with a mold comprising an annular die with upper and lower plungers, the mold for precompaction (and even pretreatment) is preferably the same one used in subsequent hot pressing. The mold can be of any material not adversely reactive with the reaction mixture and that can withstand desired pressures up to 15,000 psi (about 1055 kg/cm$^2$) or more. Graphite molds have been found very suitable for pressures up to 10,000 psi (about 700 kg/cm$^2$) and were exclusively used in making the samples of the invention. At least the precompaction pressure is usually applied to the charged mold and a suitable atmosphere is provided to completely contact the charged mold before heating is begun to effect reaction hot pressing. A moderate vacuum (e.g. about $1 \times 10^{-4}$ Torr) was satisfactorily employed in making the samples of the invention; however, inert gas atmosphere may also be employed for the same purpose of protecting the reactants and the mol from adverse air oxidation. As necessary, the pressure is increased to the full load during heating to or at the maximum hot pressing temperature. To assure good body density, full pressure should be at least 2000 psi (about 140 kg/cm$^2$). Heating can be done in any suitable hot pressing furnace, such as an induction heating furnace or electric resistance heating furnace used to make samples of the invention, which provides very rapid heat-up. Heating rates satisfactorily employed ranged between 9 and 25 °C/minute, the slower rates being used with reactant mixtures evolving hydrogen that is drawn off by the vacuum system. Heating progresses to a temperature at which the reaction sintering is initiated. That event is marked by a rapid temperature rise in the mold due to exothermic heat evolution from the reaction. When the maximum temperature and pressure for the reaction hot pressing are attained, they are usually held for at least some short period to assure complete reaction sintering, e.g. about 1-2 hours for products ranging between 1.5-3 inches (about 3.8-7.6 cm) in diameter and about 0.2-0.5 inch (about 0.5-1.3 cm) thick as in the cases of the samples made of the invention. Thereafter, the molds containing the samples are cooled in the furnace under protective atmosphere at furnace cooling rate and the pressure is held on the samples until they were cooled to about room temperature. Then the molds are removed from the furnace and the samples are pressed out of the annular mold body.

In making larger size bodies or components (e.g. 4 inches or about 10 cm. diameter x 1 inch or 2.5 cm thick) containing hydride reactant, it is desirable to precompact the reactant mixture and heat that compact in a vacuum furnace where the compact is merely supported by a setter in order to safely remove the larger volume of hydrogen. This heating is done at about 650 °C for $TiH_2$ and the heating period is sufficient to remove the hydrogen, e.g. 5-6 hours for one or two compacts and as long as 2 days for about 28 compacts heated at one time. Thereafter, these pretreated compacts are cooled to room temperature, removed from the vacuum furnace and then reaction sintered as previously described.

For bodies or components of lesser density, the reactant mixture can be fully compacted or shaped at room temperature generally at pressures up to 60,000 psi (about 4.2 tons/cm$^2$) or more, but preferably between 10-50 x $10^3$ psi (about 0.7-3.5 tons/cm$^2$), to yield a green (i.e. unfired) body. Preforming of the green body can be done by any suitable ceramic fabrication process, e.g. dry or wet pressing, isostatic pressing, slip casing, extrusion, injection molding, doctor blading, etc.

The cermet bodies or components of this invention can be specially designed to have selected useful properties from a variety of choices depending upon their composition and processing. Generally they are very refractory and thermal shock resistant. They are also generally electroconductive. Many have low electrical resistivity and can function as electrodes or electrical conductors in a variety of applications. With resistance to chemical attack, such electrode and conductor applications can be in industrial electrochemical processes including electrolytic metal production (electrowinning and electrorefining) cells, batteries and fuel cells. Some bodies can have adequate electrical resistance to function as electrical resistance elements such as heating elements. Most of them are relatively wear-resistant and hard. They can also exhibit good strength and excellent toughness. Consequently, those bodies can also serve as cutting tool tips, grinding media, high temperature bearings, engine components and other structural parts. In their more porous form, they may serve, for example, as filters for molten metal, as diaphragms or other components of electrolytic metal production cells, or as high surface area or catalytic devices.

The above-described reaction sintered cermet body, preferably in hot pressed form, is especially suited for components of an electrolytic aluminum production (electrowinning and electrorefining) cell and durable in contact with the liquid contents thereof when the second phase is aluminum metal and the first phase is or phases are boride, carbide, nitride, silicide and/or sulfide of metal selected from Groups IV A, V A and VI A. Especially desirable is the body of diboride of metal selected from Group IV A (particularly titanium) and aluminum metal.

Bodies A & B

The following two bodies are an exemplary comparison of a reaction hot pressed cermet body and a conventionally nonreaction hot pressed cermet body. Both had batch mixtures formulated to give 1:1 molar ratio of $TiB_2$ and aluminum metal phases in those bodies.

Body A of the invention was formed in accordance with the previous molar formula as follows: The batch components consisted of 50.7 wt.% $TiH_2$ powder of 2.4 $\mu$m mean particle size (mps) and 49.3 wt.% $AlB_2$ powder of 18.5 $\mu$m mps and containing a small amount of free aluminum. The $TiH_2$ powder contained 3.23 wt.% oxygen and 0.02 wt.% carbon as impurities. The $AlB_2$ powder contained 1.37 wt.% oxygen and 0.2 wt.% carbon as impurities. These reactants were dry mixed without binder in a revolving plastic jar with alumina balls. The reactant mixture was hot pressed in a graphite mold and in vacuum at a maximum reaction sintering temperature of 1100°C at 6000 psi (421.8 kg/cm$^2$) for 2 hours. During heating, the $TiH_2$ substantially decomposed at temperatures in the range of about 400-500°C. The $AlB_2$ substantially decomposed as the temperature advanced from about 650°C to about 900°C and beyond. An intermediate or transitory phase formation of aluminum-titanium alloy apparently formed and was then consumed in further reaction as the temperature progressed through the range of about 700-1100°C. The reaction was completed at 1100°C.

Body B not of the invention was formed as follows:
The batch components consisted of 72 wt.% $TiB_2$ powder of 3.2 $\mu$m mps and 28 wt.% aluminum powder of 43 $\mu$m mps. The $TiB_2$ powder contained 0.36 wt.% oxygen, 0.26 wt. carbon and 0.02 wt.% nitrogen. The aluminum powder contained 0.096 wt.% oxygen, 0.005 wt.% carbon and 0.01 wt.% nitrogen. These nonreactive components were wet mixed with trichlorethane in a revolving plastic jar with alumina balls. The nonreactive mixture was hot pressed in the same manner as for Body A except the time period was only 1 hour.

The comparative properties of Bodies A and B are set forth in Table 1. Note 1: (M) indicates major phase peaks, (m) indicates minor phase peaks and (T) indicates trace phase peaks. Note 2: N.D. indicates that property was not determined. Note 3: A nonreaction hot pressed body of 75 wt.% $TiB_2$ and 25 wt.% Al exhibited deformation starting at about 700°C under 50 psi (3.5 kg/cm$^2$) load in air. Note 4: Lack of deformation @ 1100°c was observed on a 1/8 x 1/8 x 2 inch (3.2x3.2x50.8 mm) test bar; however, deformation was observed between about 670-700°C on other 1/8 x 1/8 x 3 inch (3.2x3.2x76.2 mm) test bars of similar composition, but having $TiB_2$ phase grain size of mostly 1-2 $\mu$m, under load of 250 psi (17.6 kg/cm$^2$). Note 5: No further oxidation at 1050°C occurred up to 180 hours; whereas a hot pressed sample of only $TiB_2$ exhibited oxidation of about 20 mg/cm$^2$ after 180 hours at 1050°C in air with continuing oxidation expected.

In Body A, the very small (mostly on the order of 0.1-0.5 $\mu$m) $TiB_2$ grains are intimately interdispersed with and separated by thin layers of aluminum metal, which are estimated to be less than about 1000Å thick in this dense body. $TiB_2$ grains frequently appear as plate-like particles under scanning transmission electron microscopy, the smallest of which is about 0.05 $\mu$m wide.

Table 1

| | Body A | Body B |
|---|---|---|
| x-ray phases (see Note 1) | $TiB_2$(M) | $TiB_2$(M) |
| | Al(m) | Al(m) |
| | $Al_2O_3$(T) | Unknown(T) |
| Al, wt.% | 23.7 | 21.6 |
| Ti, wt.% | 46.3 | 52.1 |
| $O_2$, wt.% | 1.7 | 1.05 |
| C, wt.% | 0.2 | 0.21 |
| $N_2$, wt.% | 0.1 | <0.006 |
| $TiB_2$ phase grain size, µm | $\leq 2$ | $\geq 3.2$ |
| mostly | <1 | |
| Density, g/ $cm^3$ | 3.6 | 3.4 |
| Open porosity, % | 0 | 10.5 |
| Modulus of rupture @20°C, psix$10^3$ | 55.1 | 43.9/48.8 |
| (tons/$cm^2$ | 3.87 | 3.09) |
| Young's Modulus @20°C, psix$10^6$ | 35.6 | 23.9 |
| (tons/$cm^2$x$10^3$ | 2.50 | 1.66) |
| Shear Modulus @20°C, psix$10^6$ | 14.8 | 9.9 |
| (tons/$cm^2$x$10^3$ | 1.04 | 0.70) |
| Poisson's ratio @20°C | 0.200 | 0.198 |
| Beam bend deformation: | | |
| 50 psi (3.5 kg/$cm^2$) load @ | | |
| 1200°C in air | None | See note 3 |
| approx. 440 psi (30.9 kg/$cm^2$) | | |
| load in argon °1100°C | None | N.D. |
| | (See Note 4) | See note 2 |
| Rockwell C hardness | 42 | <10 |
| Knoop hardness | 400 | N.D. |
| Electrical resistivity, µΩ-cm in argon: | | |
| 25°C | 10.2 | 14.8 |
| 250°C | 14.5 | N.D. |
| 500°C | 28.2 | N.D. |

| | | |
|---|---|---|
| 750°C | 50.1 | N.D. |
| 1000°C | 63.1 | N.D. |
| Oxidation, $mg/cm^2$: | | |
| 1000°C for 48 hours in air | <2.5 | N.D. |
| 1050°C for 30 hours in air | approx. 4 (See Note 5) | N.D. |
| Thermal shock | | |
| 1050°C→20°C in air | No crack | N.D. |
| 20°C air →1000°C molten Al →20°C air | No crack | N.D. |

Body A and other reaction sintered, cermet bodies of this invention were found to be extremely tough. They were cut with a diamond saw only with extreme difficulty and were not polished easily with either diamond or SiC. Electric discharge machining (EDM), e.g. with a wire electrode, or electrochemical machining were found useful for cutting these new materials.

In relation to most glasses and ceramics, these new reaction sintered cermet bodies exhibit some ductility under mechanical loading. Such bodies have been dented by impact loads insufficient to cause fracturing thereof. Also gradually applied loads short of causing fracture failure have resulted in indications of some permanent inelastic or plastic deformation in a test piece of body A. Presumably the presence of the metal phase provides such limited but notable ductile character to such bodies.

Body A was also tested for suitability for use as a component, e.g. cathode or cathode current collector, in an electrolytic aluminum production cell. In a cathode pool test, a sample of Body A was merely placed submerged (but not connected at the cathode) in the molten aluminum cathode pool of a laboratory test cell operated at about 1000°C for 10 hours with anode and cathode current density of about 0.5 $A/cm^2$. In a hanging cathode test, a sample of Body A was suspended and connected as the cathode extending into the representative molten cryolite-aluminum bath of the laboratory test cell operated as noted above. In a commercial cell test, a sample of Body A was merely placed submerged (but not connected as the cathode) in the molten aluminum cathode pool of a 60,000 ampere Hall Heroult cell for 2 weeks and also for 4 weeks. In all these tests, the molten aluminum wetted the sample, and the sample exhibited no significant corrosion, erosion or dimensional change except for some slight surface layer exfoliation (only about 50 μm thick) in a few areas. In contrast, bodies somewhat similar in composition ($TiB_2$:Al molar ratio of 75:25) and generally similar in method of formation to that of Body B exhibited substantial corrosion/erosion in cathode pool and commercial cell tests, i.e. corners were rounded and moderate-to-severe erosion of grains from the surfaces thereof occurred.

By modifying the phase ratio $TiB_2$:Al of Body A, the properties may be tailored to more desired values. The ratio modification can be attained by adjusting the proportions to the $TiH_2$ and $AlB_2$ reactants or by adjusting the hot pressing pressure and/or temperature to higher or lower levels that respectively cause more or less liquid aluminum phase to be squeezed out of a body during hot pressing. The latter effect is especially applicable to reaction hot pressed bodies according to the molar formula:

$$\underbrace{3TiH_2 + AlB_2 + 0.33\ AlB_{12}}_{\text{(reactants)}} \rightarrow \underbrace{3TiB_2 + 1.33Al}_{\text{(product phases)}} + \underbrace{3H_2}_{\text{(gas)}}$$

where the pressure can range between 4000-6000 psi (about 281-422 $kg/cm^2$). In either case, as the phase ratio $TiB_2$:Al increases, there will likely be an increase in property values such as density, modulus of

rupture, Young's Modulus, hardness and electrical resistivity (because aluminum is more electrically conductive than $TiB_2$).

Bodies C & D

Two reaction hot pressed bodies were prepared according to the molar formula:

$Ti + AlB_2 \rightarrow TiB_2 + Al$

from a reactant mixture of 49.7 wt.% Ti powder and 50.3 wt.% $AlB_2$ powder. Their other process parameters and properties are set forth in Table 2.

Table 2

| | Body C | Body D |
|---|---|---|
| Ti powder mps, µm | 4.9 | 41 |
| $AlB_2$ powder mps, µm | 10.5 | 10.5 |
| Hot pressing - | | |
| Temperature, °C | 1100 | 1150 |
| Pressure, psi | 4000 | 3000 |
| ($kg/cm^2$ | 281 | 211) |
| Time @ Temp., hours | 1 | 0.5 |
| $TiB_2$ phase grain size, µm | 0.5-2 | 3-11 |
| | (1.25 mean) | (7 mean) |
| Density, g/ $cm^3$ | 3.60 | 3.15 |
| Open Porosity, % | 0.2 | 2.0 |
| Young's Modulus @ 20°C, psix$10^6$ | 33.4 | 31.2 |
| ($tons/cm^2 x10^3$ | 2.[illegible]5 | 2.19) |
| Maximum temperature without beam bend defomration under 440 psi (30.9 $kg/cm^2$) load in argon, °C (*two separate tests) | *700<br>*950 | 600 |
| Cathode Pool Test | Very very slight edge erosion | Severe grain erosion |

The powder article size and $TiB_2$ phase grain size data of Bodies C and D illustrate an observed trend in many reaction sintered cermet bodies of this invention, viz. the particle size of the powder containing the metal element which forms the nonoxide ceramic phase generally governs, in a direct proportional manner, the grain size of the nonoxide ceramic phase.

The data of Bodies C and D regarding $TiB_2$ phase grain size and Cathode Cell Test results also show the need for the reaction sintered cermet to have a mean grain size of the nonoxide ceramic phase being not greater than 6 µm to provide good erosion resistance to cathodic molten aluminum.

Body E

A cermet example of the invention employing an intermetallic compound reactant was made according to the following molar formula:

$TiAl + 2B \rightarrow TiB_2 + Al$

Thus, Body E was prepared from a reactant mixture consisting of 77.3 wt.% TiAl powder of 33 $\mu$m mps and 22.7 wt.% boron powder of 94 $\mu$m mps. After mixing like Body A and hot pressing at the maximum temperature of 1450 °C and pressure of 6000 psi (421.8 kg/cm$^2$) for 1 hour, the reaction sintered body had: phases of $TiB_2$(M) and Al(m), estimated $TiB_2$ grain size less than 2 $\mu$m, 13.7 wt.% Al, 53.7 wt.% Ti, a density of 3.95 g/cc, 0% open porosity, Young's Modulus of 54.96x10$^6$ psi (3.864x10$^3$ tons/cm$^2$), electrical resistivity at 20 °C of 17.0 $\mu\Omega$-cm and Rockwell A hardness of 86.5. This body is wettable by molten aluminum and is durable in molten aluminum and cryolite.

Body F

As an example of employing a diluent in a reactant mixture of this invention and of bonding preformed phase material together by a reactant mixture of this invention, Body F was formed in accordance with the following molar formula:

$$\underbrace{TiB_2 + TiH_2 + AlB_2}_{\text{(reactants)}} \rightarrow \underbrace{2\ TiB_2 + Al}_{\text{(product phases)}} + \underbrace{H2}_{\text{(gas)}}$$

The reactant mixture consisted of 41.3 wt.% $TiB_2$ powder of 3.2 $\mu$m mps, 29.7 wt.% $TiH_2$ powder of 28 $\mu$m mps and 29.0 wt.% $AlB_2$ powder of 9.2 $\mu$m mps. Mixing was done in the same manner as for Body B, except that 4 wt.% Carbowax binder was added. The binder was burned out of the reaction mixture at 350 °C for 2 hours in air. Hot pressing was performed in the same manner as for the previous bodies, but at a maximum reaction sintering temperature of 1500 °C and at 5000 psi (351.5 kg/cm$^2$) for 2 hours. The resulting phases were $TiB_2$(M), Al(m) and $Ti_2B_5$(T). The grain size of the boride phases was less than 10 $\mu$m. Density was 3.93 g/cc. Open porosity was 2.4%. The body was extremely tough and had a modulus of rupture at 20 °C of 43,300 psi (30.4 tons/cm$^2$). Electrical resistivities were 22.4 $\mu\Omega$-cm at 25 °C and 120.2 $\mu\Omega$-cm at 1000 °C. Samples of Body F tested in the cathode pool test and hanging cathode test showed no dimensional change and no corrosion.

Body G

Other boride-metal reaction sintered cermets can be formed by appropriate choice of reactants. For example, Body G was formed according to the molar formula:

$$\underbrace{ZrH_2 + AlB_2}_{\text{(reactants)}} \rightarrow \underbrace{ZrB_2 + Al}_{\text{(product phases)}} + \underbrace{H_2}_{\text{(gas)}}$$

The reactant mixture consisted of 34.3 wt.% $AlB_2$ of 18.5 $\mu$m mps and 65.7 wt.% $ZrH_2$ of 1-3 $\mu$m mps. Mixing was done the same as for Body B. Similar reaction hot pressing was performed at 1200 °C and 5000 psi (351.5 kg/cm$^2$) for 2 hours. The resulting phases were: $ZrB_2$(M), Al(m) and unknown phase(T). The grain size of the boride phase was less than 5 $\mu$m. Density was 2.62 g/cc. Open porosity was 35.7%. Impurities were: 2.0 wt.% $O_2$, 0.14 wt.% C and 0.14 wt.% $N_2$. Young's Modulus was 8.6x10$^6$ psi (605 tons/cm$^2$). Shear Modulus was 3.8x10$^6$ psi (267 tons/cm$^2$). Poisson's ratio was 0.158. Electrical resistivity at 20 °C was 30.2 $\mu\Omega$-cm. A sample of Body G tested in the cathode pool test showed no significant dimensional changes, although slight erosion of grains occurred at some corners of the sample, presumably due to the unusually high porosity of this particular body.

Body H

Illustrative of cermet composite bodies of the invention made with other metal phase is Body H formed according to the following molar formula:

$$NiB + 3TiH_2 + 5B \rightarrow 3TiB_2 + Ni + 3H_2$$

(reactants) (product phases) (gas)

The reactant mixture consisted of 25.48 wt.% NiB powder of -35 mesh, 54.76 wt.% $TiH_2$ powder of 2.4 $\mu$m mps and 19.76 wt.% B of 2 $\mu$m mps. This mixture was ball milled in dry condition in the same manner as for Body A, but milling was continued for a longer time of 16 hours to reduce the NiB particle size to -325 mesh. Then the mixture was hot pressed in the previously described manner at 1250°C and 4000 psi (281.2 kg/cm$^2$). Similar to the reaction sintered cermet bodies with aluminum metal phase, some of the nickel phase of Body H is squeezed out during hot pressing and it flows out through the small spaces between the two end plungers and the annular body comprising the conventional graphite mold assembly. However, since nickel is a heavier element than aluminum, it contributed (along with hydrogen evolution) a relatively larger weight loss (24%) from this body vis a vis the weight of its reaction mixture. X-ray analysis showed only $TiB_2$ phase presumably because the amount of nickel phase left in Body H was less than the lower quantitative detection limit of the x-ray equipment. Nevertheless, quantitative chemical analysis of Body H showed 63:5 wt.% Ti and 3.35 wt.% Ni. Body H was found to have $TiB_2$ grain size of less than 2 $\mu$m, a density of 4.53 g/cc, 0% open porosity, Young's Modulus of 71.7x10$^6$ psi (5.04x10$^3$ tons/cm$^2$) and Rockwell A hardness of 91.5.

<u>Bodies I-1 & I-2</u>

Two bodies of the invention were formed by reaction sintering after the reactant mixture was first fully shaped (i.e. without hot pressing). A reactant mixture the same as for Body A was wet mixed in the same manner as in the mixing for Body E. That mixture was isostatically pressed at 3515 kg/cm$^2$ (50,000 psi) into two green bodies and the resultant green bodies were heated at 300°C in air to burn out the wax binder. Then those bodies were fired at 100°C/hr. in argon to the maximum reaction sintering temperature: one body at 1200°C and the other at 1500°C. After 6 hours at those temperatures, the bodies were cooled at 100°C/hr. in argon. The resultant cermet bodies were hard but porous with the following characteristics:

| Body: | I-1 | I-2 |
|---|---|---|
| Maximum temperature: | 1200°C | 1500°C |
| | $TiB_2$(M) | $TiB_2$(M) |
| | Al(m) | Al(m) |
| | $Al_2O_3$(T) | |
| $TiB_2$ phase grain size, µm | $\leq 2$ | $\leq 2$ |
| Density, g/ cm$^3$ | 1.82 | 2.05 |
| Open porosity, % | 42.3 | 37.1 |
| Oxygen impurity, wt.% | 2.3 | 2.0 |

These electrically conductive bodies can be employed as a cell component such as key 24 as shown in Figs. 1a through 2 of U.S. Defensive Publication T993,002 of April 1, 1980.

Other reaction sintered cermet bodies (with or without hot pressing as desired) can be formed by appropriately selecting other reactant mixtures within the invention definition. The following molar formulas are illustrative of such other selections:

$TiH_2 + Al + 2B \rightarrow TiB_2 + Al + H_2$

$3\ TiH_2 + AlB_2 + 0.3\ AlB_{12} \rightarrow 3TiB_2 + 1.3\ Al + 3H_2$

$3\ TiH_2 + 7\ Al + 6B \rightarrow 3\ TiB_2 + 7\ Al + 3\ H_2$

$3\ TiH_2 + 3AlB_2 + 4\ Al \rightarrow 3\ TiB_2 + 7\ Al + 3H_2$

$NbH_2 + AlB_2 \rightarrow NbB_2 + Al + H_2$

$Cr + AlB_2 \rightarrow CrB_2 + Al$

$Fe_2B + 4\ TiH_2 + 7B \rightarrow 4\ TiB_2 + 2\ Fe + 4H_2$

$2WB + TiC \rightarrow TiB_2 + WC + W$

$2Co_2B + TiH_2 \rightarrow TiB_2 + 4\ CO + H_2$

$FeB + Ni \rightarrow NiB + Fe$

$ZrH_2 + PtB_2 \rightarrow ZrB_2 + Pt + H_2$

$2\ Fe_2B + U \rightarrow UB_2 + 4Fe$

$Al_4C_3 + 7Ti \rightarrow 3TiC + 4TiAl$

$NiC + Hf \rightarrow HfC + Ni$

$Si + VC \rightarrow SiC + V$

$Al + 2BN + 4Tl \rightarrow TiB_2 + 2TiN + TiAl$

$TiN + Al \rightarrow AlN + Ti$

$Cr_2N + Ta \rightarrow TaN + 2Cr$

$AlSi_2 + Ti \rightarrow TiSi_2 + Al$

$TaSi_2 + Ti \rightarrow TiSi_2 + Ta$

$CoSi_2 + Th \rightarrow ThSi_2 + Co$

$Al_2S_3 + 3Ce \rightarrow 3CeS + 2\ Al$

$3\ MnS + 2Al \rightarrow Al_2S_3 + 3Mn$

$FeS + Mn \rightarrow MnS + Fe$

$1.5\ PbS_2 + 2Al \rightarrow Al_2S_3 + 1.5\ Pb$

$CuS + Zn \rightarrow ZnS + Cu$

$ZnS + Ba \rightarrow BaS + Zn$

## Claims

**1.** A reaction sintered cermet body consisting of a fine-grained, homogeneous, intimate interdispersion of:
(a) 30-95 mole percent of first phase or phases having a maximum grain size not greater than 10 $\mu$m and being boride, carbide, nitride, silicide, sulfide or combination thereof of one or more of the

elements of Groups II A, III B exclusive of B, IV B, II B, III A including lanthanide and actinide series elements, IV A, V A, VI A, VII A, VIII A, and

(b) 5-70 mole percent of second phase or phases being metal, alloy, intermetallic compound or combination thereof of one or more of the elements of Groups III B, exclusive of B, IV B, I B, II B, IV A, V A, VI A, VII A, VIII A;

which body contains 0 to 4 weight percent oxygen and is prepared by the process comprising:

(c) admixing particulate reactants of maximum particle size not greater than 150 μm and being elements, compounds, intermetallic compounds, alloys or combination thereof in stoichiometric proportions to form the first and second phases, and

(d) shaping and heating the admixture to form the reaction sintered body, the heating being done in nonreactive atmosphere and at temperature at which the reaction and sintering occurs between the reactants to form the first and second phases.

**2.** A body as claimed in claim 1 characterized in that the shaping and heating are simultaneous steps of hot pressing.

**3.** A body as claimed in claim 1 or claim 2 characterized in that the mean grain size of the first phase or phases is not greater than 6 μm and the mean particle size of the reactants is less than 100 μm.

**4.** A body as claimed in claim 3 characterized in that the maximum grain size of the first phase or phases is not greater than 5 μm and the maximum particle size of the reactants is substantially not greater than 44 μm.

**5.** A body as claimed in any of claims 1 to 4 characterised in the first phase or phases being boride, carbide, nitride, silicide, sulfide or combination thereof of one or more of the elements of Groups 4b, 5b and 6b, and having the second phase being Al, alloy or intermetallic compound thereof, or combination thereof.

**6.** A body as claimed in claim 5 characterised in that the second phase is Al which at least partially separates the grains of boride and is in thin layers less than 1000A in thickness.

**7.** A body as claimed in any of claims 1 to 6 characterised in that it has 45-95 mole percent of the first phase or phases and 5-55 mole percent of the second phase or phases.

**8.** A body as claimed in claim 7 characterised in that it is used in the electrolytic production of aluminum.

**Revendications**

**1.** Un corps en cermet fritté par réaction, constitué d'une dispersion intime, homogène, à grains fins de :

a) 30-95 moles % d'une ou plusieurs première(s) phase(s) ayant une grosseur de grains maximale non supérieure à 10 μm et formée(s) d'un borure, carbure, nitrure, siliciure, sulfure ou d'une combinaison de ceux-ci, d'un ou plusieurs des éléments des Groupes II A, III B à l'exclusion de B, IV B, II B, III A y compris les éléments des séries des lanthanides et des actinides, IV A, V A, VI A, VII A VIII A, et

b) 5-70 moles % d'une ou plusieurs seconde(s) phase(s) formée(s) d'un métal, d'un alliage, d'un composé intermétallique ou d'une combinaison de ceux-ci, d'un ou plusieurs des éléments des Groupes III B à l'exclusion de B, IV B, I B, II B, IV A, V A, VI A, VII A et VIII A ;

ce corps contenant 0 à 4 % en poids d'oxygène et ayant été préparé par le procédé consistant :

c) à mélanger des réactifs en particules ayant une grosseur de particules maximale non supérieure à 150 μm et formés d'éléments, composés, composés intermétalliques, alliages ou d'une combinaison de ceux-ci, en proportions stoéchiométriques pour former les première(s) et seconde(s) phases, et

d) à mettre en forme et à chauffer le mélange pour former le corps fritté par réaction, le chauffage étant effectué dans une atmosphère non réactive et à une température à laquelle la réaction et le frittage des réactifs se produit pour former les première(s) et seconde(s) phases.

**2.** Un corps selon la revendication 1, caractérisé en ce que la mise en forme et le chauffage sont des étapes simultanées de pressage à chaud.

3. Un corps selon la revendication 1 ou 2, caractérisé en ce que la grosseur de grains moyenne de la ou des première(s) phase(s) n'excède pas 6 $\mu$m et la grosseur de particules moyenne des réactifs est inférieure à 100 $\mu$m.

4. Un corps selon la revendication 3, caractérisé en ce que la grosseur de grains maximale de la ou des première(s) phase(s) n'excède pas 5 $\mu$m et la grosseur de particules maximale des réactifs n'excède substantiellement pas 44 $\mu$m.

5. Un corps selon l'une quelconque des revendications 1 à 4, caractérisé en ce que la ou les première(s) phase(s) consiste(nt) en un borure, carbure, nitrure, siliciure, sulfure ou d'une combinaison de ceux-ci, d'un ou plusieurs des éléments des Groupes 4b, 5b, 6b, et la seconde phase est formée d'Al, d'un alliage ou d'un composé intermétallique de celui-ci, ou d'une combinaison de ceux-ci.

6. Un corps selon la revendication 5, caractérisé en ce que la seconde phase est de l'Al qui sépare au moins partiellement les grains de borure et est présent en couches minces de moins de 1000 Å d'épaisseur.

7. Un corps selon l'une quelconque des revendications 1 à 6, caractérisé en ce qu'il comprend 45-95 moles % de la ou les première(s) phase(s) et 5-55 moles % de la ou les seconde(s) phase(s).

8. Un corps selon la revendication 7, caractérisé en ce qu'il est utilisé dans la production électrolytique d'aluminium.

**Patentansprüche**

1. Reaktionsgesinterter Cermetkörper, bestehend aus einer feinkörnigen, homogenen und innigen Interdispersion aus :
   (a) 30-95 Mol.-% einer ersten Phase oder erster Phasen mit einer maximalen Korngröße von nicht mehr als 10 um, bestehend aus Borid, Carbid, Nitrid, Silicid, Sulfid oder deren Kombination mit einem oder mehreren der Elemente der Gruppen II A, III B unter Ausschluß von B, IV B, II B, III A einschließlich der Elemente der Lanthaniden- und Actinidenreihen, IV A, V A, VI A, VII A, VIII A und
   (b) 5-70 Mol.-% einer zweiten Phase oder zweiter Phasen bestehend aus einem Metall, einer Legierung, einer intermetallischen Verbindung oder einer Kombination hieraus mit einem oder mehreren der Elemente der Gruppen III B, ausschließlich von B, IV B, I B, II B, IV A, V A, VI A, VII A, VIII A,
   wobei der Körper 0 bis 4 Gew.-% Sauerstoff enthält, und er durch das folgende Verfahren hergestellt wird, welches umfaßt :
   (c) Beimischen teilchenförmiger Reaktanten mit einer maximalen Korngröße von nicht mehr als 150 $\mu$m, bestehend aus Elementen, Verbindungen, intermetallischen Verbindungen, Legierungen oder deren Kombinationen in stöchiometrischen Anteilen, um die ersten und zweiten Phasen zu bilden, und
   (d) Formen und Erhitzen der Beimischung, um den reaktionsgesinterten Körper zu bilden, wobei die Erhitzung in einer nicht-reaktiven Atmosphäre und bei einer Temperatur durchgeführt wird, bei welcher die Reaktion und die Sinterung zwischen den Reaktanten stattfindet, um die ersten und zweiten Phasen zu bilden.

2. Körper nach Anspruch 1,
   dadurch gekennzeichnet,
   daß das Formen und Erhitzen gleichzeitige Schritte beim Heißpressen darstellen.

3. Körper nach Anspruch 1 oder 2,
   dadurch gekennzeichnet,
   daß die mittlere Korngröße der ersten Phase oder der ersten Phasen nicht größer als 6 $\mu$m und die mittlere Teilchengröße der Reaktanten geringer als 100 $\mu$m ist.

4. Körper nach Anspruch 3,
   dadurch gekennzeichnet,
   daß die maximale Korngröße der ersten Phase oder der ersten Phasen nicht mehr als 5 $\mu$m und die

maximale Teilchengröße der Reaktanten im wesentlichen nicht größer als 44 $\mu$m ist.

5. Körper nach einem der Ansprüche 1 - 4,
dadurch gekennzeichnet,
daß die erste Phase oder die ersten Phasen Borid, Carbid, Nitrid, Silicid, Sulfid oder deren Kombinationen mit einem oder mehreren der Elemente der Gruppen 4b, 5b und 6b darstellen und die zweite Phase Al, eine Legierung oder eine intermetallische Verbindung hieraus, oder deren Kombination darstellt.

6. Körper nach Anspruch 5,
dadurch gekennzeichnet,
daß die zweite Phase Al ist, welche wenigstens teilweise die Boridkörner trennt, und daß sie in dünnen Schichten von geringer als 1000Å Dicke vorliegt.

7. Körper nach einem der Ansprüche 1 bis 6,
dadurch gekennzeichnet,
daß er 45 - 95 Mol.-% der ersten Phase oder der ersten Phasen und 5 - 55 Mo.-% der zweiten Phase oder der zweiten Phasen aufweist.

8. Körper nach Anspruch 7,
dadurch gekennzeichnet,
daß er bei der elektrolytischen Herstellung von Aluminium verwendet wird.

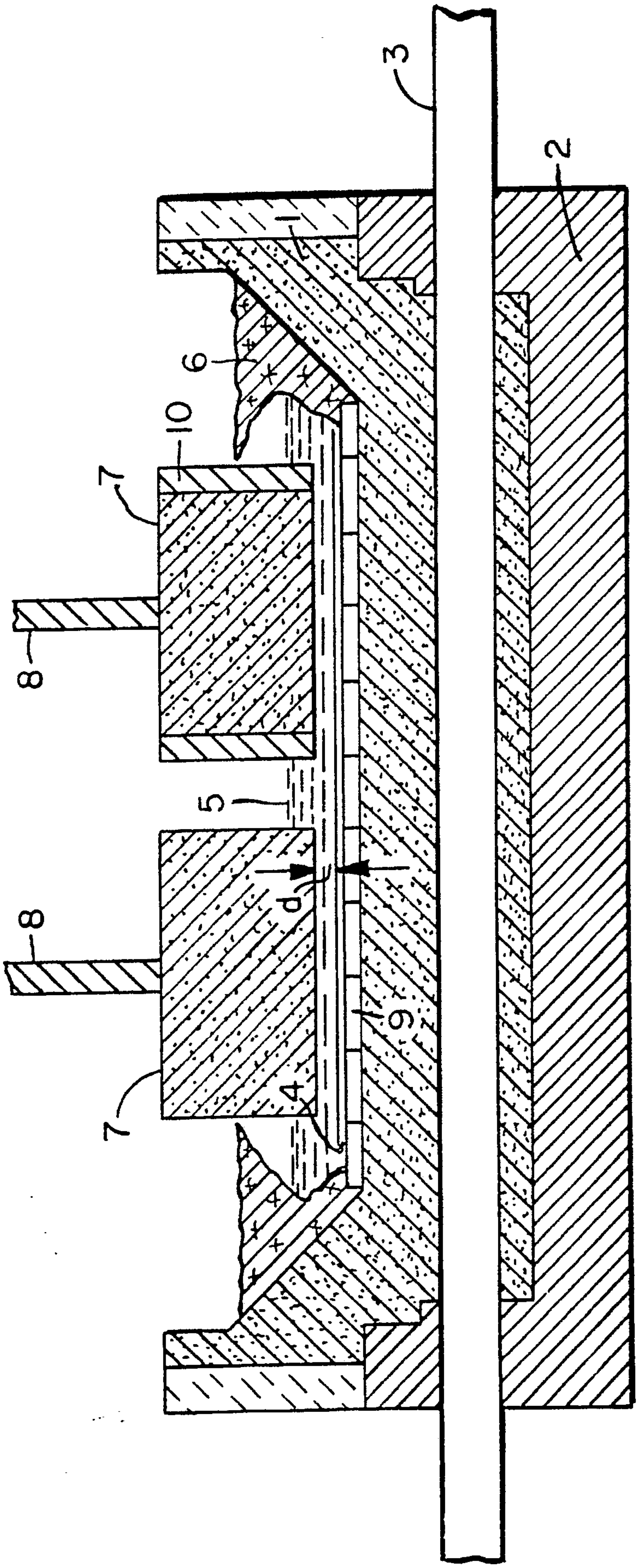
3
2
1
6
10
7
8
5
d
8
9
7
4